# EUROPÄISCHE PATENTSCHRIFT

(11) **EP 1 412 209 B1**
(45) Veröffentlichungstag und Bekanntmachung des Hinweises auf die Patenterteilung: **30.08.2006**
(21) Anmeldenummer: 02760299.4
(22) Anmeldetag: 31.07.2002
(51) Int. Cl.: B60C 23/04

(54) **TELEMETRISCHES REIFENDRUCK-KONTROLLSYSTEM**
TELEMETRIC TIRE PRESSURE MONITORING SYSTEM
SYSTEME DE CONTROLE TELEMETRIQUE DE PRESSION DES PNEUS

(30) Priorität: 01.08.2001 DE 10137591
(43) Veröffentlichungstag der Anmeldung: 28.04.2004
(73) Patentinhaber: Daimler Chrysler AG, 70567 Stuttgart (DE)
(72) Erfinder: BURGHARDT, Jörg, 71032 Böblingen (DE)
(86) Internationale Anmeldenummer: PCT/EP2002/008528
(87) Internationale Veröffentlichungsnummer: WO 2003/011617

(56) Entgegenhaltungen:
- WO-A-98/06078
- DE-A- 19 735 686
- US-A- 5 825 286
- US-B1- 6 204 758
- US-B1- 6 278 363

## Beschreibung

Die Erfindung betrifft ein Verfahren zur Radüberwachung mit einem telemetrischen Reifendruck-Kontrollsystem für die Reifendrücke an Rädern eines Fahrzeuges, mit jeweils einen Druckmeßsensor aufweisenden radseitigen Modulen und einem damit - insbesondere drahtlos - zur Auswertung der Sensorsignale kommunizierenden Steuergerät, welches ein Warnsignal erzeugt, wenn ein Druckschwellwert für den Reifendruck unterschritten wird und/oder ein Druckverlust einen Verlustschwellwert betragsmäßig überschreitet.

Auf dem Markt werden bereits serienmäßige Kraftfahrzeuge mit Reifendruck-Kontrollsystemen angeboten, die im wesentlichen drei Hauptbestandteile aufweisen: An den Luftventilen der Radfelgen angeordnete radseitige Module umfassen Temperatur- und Druckmeßsensoren sowie einen batteriegespeisten Hochfrequenzsender, über den Datentelegramme zu Druck und Temperatur im Reifen abgegeben werden. Diese Datentelegramme werden von einer Hochfrequenzantenne über einen Datenbus in ein zentrales Steuergerät weitergeleitet und dort weiterverarbeitet. Gegebenenfalls werden dann Warnsignale erzeugt, insbesondere, wenn ein abrupter Druckverlust von mehr als 0,2 bar/min auftritt. Außerdem kann ein Warnsignal auch dann erzeugt werden, wenn ein Druckschwellwert unterschritten wird.

Die DE 197 35 686 A1 bezieht sich auf die Zuordnung der Datentelegramme zu den einzelnen Rädern des Fahrzeuges, um bei Erzeugung eines Warnsignales auch anzeigen zu können, welches Fahrzeugrad betroffen ist. Zu diesem Zweck ist vorgesehen, die radseitigen Module zusätzlich mit einer Sensorik für Beschleunigungen auszurüsten, um einerseits die Beschleunigung des radseitigen Moduls in Radialrichtung des Rades (Zentrifugalbeschleunigung) und andererseits die Beschleunigung des Moduls in Umfangsrichtung des Rades (Bahnbeschleunigung) ermitteln zu können. Durch Bestimmung von Integralen der Zentrifugalbeschleunigung läßt sich das Maß des Weges, der von einem Rad innerhalb einer vorgegebenen Zeitspanne zurückgelegt wird, bestimmen. Da bei Kurvenfahrt die Wege der Vorderräder eines Fahrzeuges mit lenkbaren Vorderrädern und (zumindestens im wesentlichen) unlenkbaren Hinterrädern mehr oder weniger ausgeprägt größer sind als die entsprechenden Wege der Hinterräder, läßt sich durch Auswertung der Integrale der Zentrifugalbeschleunigung zwischen Hinter- und Vorderrädern unterscheiden.

Darüber hinaus kann durch Auswertung der Bahnbeschleunigung zwischen den Rädern der rechten und linken Fahrzeugseite unterschieden werden, da diese Signale ihr Vorzeichen vertauschen, wenn ein Rad von der einen Fahrzeugseite auf die andere Fahrzeugseite umgesetzt wird.

Auch die DE 198 56 861 A1 (= WO 00/34062) befaßt sich mit der Zuordnung der ausgewerteten Signale zu den einzelnen Rädern des Fahrzeuges. Hier wird zusätzlich auf die Möglichkeit verwiesen, eine zum Empfang der Datentelegramme der radseitigen Module dienende Hochfrequenzantenne so am Fahrzeug anzuordnen, daß die Signalamplituden im zeitlichen Mittel radweise unterschiedlich sind. Dazu wird die Antenne so angeordnet, daß sie von den radseitigen Modulen unterschiedlich weit entfernt bzw. unterschiedlicgh stark abgeschirmt ist.

Aus der EP 0 565 099 A1 ist ein telemetrisches Reifendruck-Kontrollsystem für Reifendrücke an Rädern eines Fahrzeugs mit jeweils einen Druckmesssensor aufweisenden radseitigen Modulen und einem damit zur Auswertung der Sensorsignale kommunizierenden Steuergerät bekannt. Das Steuergerät erzeugt ein Warnsiganl, wenn ein Druckschwellwert unterschritten wird oder wenn der Sensor nicht wie betrieblich vorgesehen arbeitet, so dass das Steuergerät vom Sensor kein Signal empfängt.

Aus der US 5,825,286 ist ein Datensammel- und Übertragungssystem bekannt, von dem ein gattungsgemäßes Verfahren nach Anspruch 1 ableitbar ist und welches eine Vielzahl Parameter im Fahrzeug, u.a. den Reifendruck erfasst und an eine zentrale Steuereinheit überträgt. Die Ändereung des Reifendrucks wird von der zentralen Steuereinheit überwacht und, falls die Änderung einen vorgebbaren Wert überschreitet, wird ein Folgeschritt eingeleitet. Außerdem können Beschleunigungssensoren im Rad vorgesehen sein, welche die Längs- und die Querbeschleunigung im Rad erfassen. Zeigen die erfassten Beschleunigungswerte einen vorgebbaren Verlauf, so wird auf ein falsch ausgewuchtetes oder auf ein loses Rad geschlossen.

Aufgabe der Erfindung ist es, die Anwendungssicherheit der bekannten Reifendruck-Kontrollsysteme zu erhöhen.

Diese Aufgabe wird durch den gegenstand des Anspruchs 1 gelöst.

Die Erfindung beruht auf dem allgemeinen Gedanken, in den radseitigen Modulen eine Sensorik für Parameter vorzusehen, die sich in Abhängigkeit von der Position des Moduls im Rad und damit bei einer Auslösung des Moduls aus seiner Sollposition deutlich ändern. Gleichzeitig wird erfindungsgemäß gewährleistet, dass das Steuergerät derartige Änderungen des vorgenannten Parameters richtig zu "interpretieren" vermag und ein Warnsignal erzeugt.

Auf diese Weise wird der Erkenntnis Rechnung getragen, dass ein von der Felge abgelöstes radseitiges Modul im Innenraum des Reifens bei der Fahrt des Fahrzeuges völlig unkontrollierte und für den Reifen potentiell zerstörerische Bewegungen ausführen kann und dementsprechend dieser höchst gefährliche Betriebszustand erkannt und dem Fahrer mitgeteilt werden muß.

Zusätzlich berücksichtigt die Erfindung die Erkenntnis, dass Parameter, die für die Erkennung, ob ein radseitiges Modul in Sollposition sitzt oder nicht, geeignet sind, auch aus anderen Gründen erfaßt werden bzw. erfaßt werden sollten. Damit kann die Erfindung in vorteilhafter Weise allein dadurch verwirklicht werden, dass das Steuergerät die Signaländerungen "erkennen" kann, welche vom Modul bei bzw. nach Verlassen seiner Sollposition erzeugt werden.

So ändern sich die Zentrifugal- sowie die Bahnbeschleunigungen, welche zur Zuordnung des jeweiligen Moduls zu den Fahrzeugrädern überwacht werden sollten, sehr deutlich, wenn das Modul innerhalb des Innenraumes des Reifens umhergeworfen oder entfernt von der Felge am Reifen mitgeschleppt wird. ' Darüber hinaus ist auch die vom Modul erfaßte Temperatur innerhalb des Reifens deutlich ortsabhängig, so dass eine Ablösung des Moduls von der Felge zu einem Temperatursprung führen kann.

Andererseits sollte eine Temperatur des Reifeninnenraumes erfaßt werden, um bei Normalbetrieb den Beitrag der Erwärmung der Luft im Reifen auf den Reifendruck erfassen zu können.

Durch entsprechende Signalauswertung können also entsprechende Parameter einerseits bei Normalbetrieb und andererseits bei gefährlichen Systemstörungen genutzt werden.

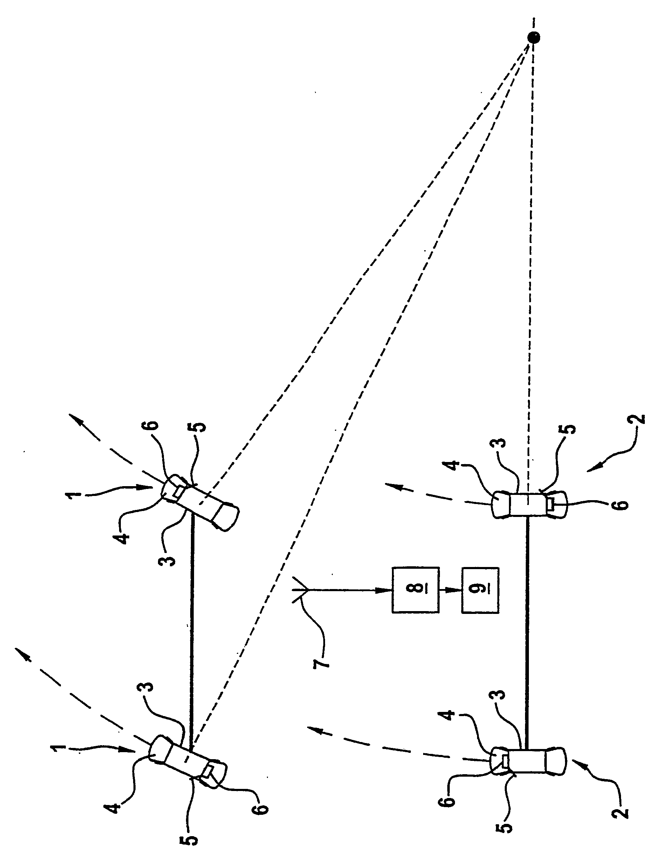

Im übrigen wird hinsichtlich vorteilhafter Merkmale der Erfindung auf die Ansprüche sowie die nachfolgende Erläuterung der Zeichnung verwiesen, anhand der eine besonders bevorzugte Ausführungsform der Erfindung näher erläutert wird.

Dabei zeigt die einzige Figur eine schematisierte Darstellung eines Kraftfahrzeuges mit erfindungsgemäßem Reifendruck-Kontrollsystem.

Gemäß der Zeichnung besitzt das Kraftfahrzeug lenkbare Vorderräder 1 sowie in üblicher Weise nicht lenkbare Hinterräder 2. Bei einer Kurvenfahrt laufen die Räder auf unterschiedlich langen Kurvenbahnen, die strichliert dargstellt sind und bei annähernd schlupffreier Fahrt zentrisch zu einem gemeinsamen Lenkpol verlaufen.

In grundsätzlich bekannter Weise besitzen die Räder 1 und 2 jeweils eine Felge 3 sowie einen Reifen 4, der über ein felgenseitiges Ventil 5 mit Luft befüllt bzw. von Luftdruck entlastet werden kann.

Am Ventil 5 ist jeweils ein radseitiges Modul 6 befestigt, welches einen Luftdrucksensor, einen Temperatursensor sowie einen Beschleunigungssensor und einen diesen zugeordneten Hochfrequenzsender zur Aussendung von Datentelegrammen zu den jeweiligen Sensorsignalen aufweist. Sowohl die Sensoren als auch der Sender werden von einer im Modul 6 angeordneten Batterie mit elektrischer Energie gespeist.

Über mindestens eine Antenne 7 werden die vorgenannten Datentelegramme drahtlos aufgefangen und einem Steuergerät 8 zugeführt, welches die Datentelegramme auswertet und dabei vorzugsweise noch weitere Signale einer fahrzeugseitigen Sensorik berücksichtigen kann.

Das Steuergerät 8 betätigt eine Anzeige- bzw. Signalgebervorrichtung 9 und arbeitet im wesentlichen wie folgt:

Aus den von den radseitigen Modulen 6 übermittelten Messdaten zu Druck und Temperatur kann das Steuergerät 8 den temperaturabhängigen Reifendruck ermitteln und damit überprüfen, ob dieser in einem zulässigen Bereich liegt und/oder ob ein gefährlich schneller Druckabfall auftritt. Dementsprechend betätigt das Steuergerät 8 die Anzeige- bzw. Signalgebervorrichtung 9, so dass diese ein Warnsignal erzeugt, welches vorzugsweise für unterschiedliche Gefahrensituationen unterschiedlich ist. Beispielsweise kann der Fahrer bei einem unzulässigen Druckabfall zum Anhalten aufgefordert werden, während bei einem Reifendruck in einem unteren Toleranzbereich lediglich ein Signal erzeugt wird, mit dem der Fahrer zu einer baldigen Erhöhung des Reifendruckes aufgefordert wird.

Bei Erzeugung der vorgenannten Warnsignale kann des weiteren angezeigt oder signalisiert werden, welches der Fahrzeugräder 1 und 2 betroffen ist.

Hierzu erhält das Steuergerät 8 von den radseitigen Modulen bei Übermittlung der Datentelegramme zu Druck und Temperatur auch Daten über die von den jeweiligen modulseitigen Beschleunigungssensoren ermittelten Bahn- und Zentrifugalbeschleunigungen. Wenn die radseitigen Module an allen Radfelgen mit gleicher Orientierung angeordnet sind, unterscheiden sich die ermittelten Bahnbeschleunigungen bei Rädern unterschiedlicher Fahrzeugseiten hinsichtlich ihres Vorzeichens, d.h. allein durch Auswertung des Vorzeichens kann zwischen rechten und linken Rädern unterschieden werden. Darüber hinaus sind die Integrale der Zentrifugalbeschleunigungen betragsmäßig unterschiedlich, wenn die Räder 1 und 2 bei Kurvenfahrt auf unterschiedlich langen Wegen laufen. Im Ergebnis kann damit das Steuergerät 8 zwischen den Vorderrädern 1 und den Hinterrädern 2 unterscheiden.

Zusätzlich kann eine Unterscheidung der verschiedenen Räder auch durch entsprechende Positionierung der Antenne 7 ermöglicht werden. Durch eine von den Rädern 1 und 2 unterschiedlich entfernte bzw. gegenüber den Hochfrequenzsignalen der modulseitigen Sender unterschiedliche Abschirmung der Antenne 7 läßt sich erreichen, dass die zu unterschiedlichen Rädern 1 und 2 gehörigen Datentelegramme unterschiedliche Signalpegel haben.

Schließlich kann das Steuergerät zusätzlich Lenkwinkelsignale oder Signale einer Motorsteuerung erhalten und auswerten, um die aus den Datentelegrammen der Module 6 ermittelten Informationen auf Plausibilität zu überprüfen.

Im Ergebnis kann also das Steuergerät die Zuordnung der Datentelegramme zu den einzelnen Rädern 1 und 2 mit hoher Sicherheit ermitteln und bei Erzeugung von Warnsignalen auch eine Zuordnung zu den Rädern ermöglichen.

Eine wesentliche Besonderheit der Erfindung liegt darin, dass das Steuergerät 8 auch "untypische" Beschleunigungsdaten, wie sie zwangsläufig auftreten, wenn sich ein radseitiges Modul 6 von der zugeordneten Felge 3 löst, richtig auswerten kann. In einem solchen Falle wird das abgelöste Modul auf vom Normalbetrieb - Modul 6 in Sollage an der zugeordneten Felge 3 - deutlich abweichender Weise bewegt und entsprechend abweichend beschleunigt. Im Ergebnis führt dies dazu, dass das Steuergerät 8 über die Anzeige- bzw. Signalgebervorrichtung 9 den Fahrer zum Anhalten und/oder zu einer Reparatur des jeweiligen Rades auffordert.

Aus Gründen der Energieersparnis senden die Module 6 in der Regel nur in zeitlich größeren Abständen Datentelegramme. Vorzugsweise ist nun vorgesehen, dass die Module eine interne Auswertung der Daten der zugeordneten Sensoren durchführen, um gefährliche Situationen, wie mangelnder Reifendruck und/oder unzulässiger Druckabfall und/oder Ablösung des Moduls 6 von der zugehörigen Felge 3, erkennen zu können. In diesem Falle wird sofort ein Datentelegramm erzeugt, zweckmäßigerweise mit besonderen Kenndaten zur jeweiligen Gefahrensituation.

Die Ablösung eines Moduls 6 von der zugehörigen Felge kann auf vielfältige Weise erkannt werden.

Beispielsweise läßt sich ein abgelöstes Modul 6 dadurch erkennen, dass die an das Steuergerät übertragenen Beschleunigungssignale zu den bei korrekter Lage des Moduls in Radial-, Tangential- und Lateralrichtung des Rades weisenden Achsen eines Moduls 6 mit dem aktuellen Fahrzustand des Fahrzeuges verglichen werden. Dabei kann jedes Modul 6 vom Steuergerät 8 gezielt zur Signalübertragung angetriggert werden, um die Beschleunigungssignale zu senden. Statt dessen können auch die regelmäßig gesendeten Signale analysiert werden. Bei bekannter Information über Fahrgeschwindigkeit, Gierwinkelgeschwindigkeit und -beschleunigung, Fahrzeugbeschleunigung und -verzögerung und/oder Lenkwinkel werden charakteristische Beschleunigungssignale erwartet. Bei Abweichungen kann auf ein von der Felge abgelöstes Modul 6 geschlossen werden, und das Steuergerät 8 gibt eine Warnung aus.

Zusätzlich oder alternativ kann ein von der zugehörigen Felge abgelöstes Modul 6 dadurch erkannt werden, dass die an das Steuergerät 8 übertragenen Beschleunigungssignale zu den bei korrekter Lage des Moduls 6 in Radial-, Tarigential- und Lateralrichtung des Rades weisenden Achsen eines Moduls 6 in.einer charakteristischen Korrelation zueinander stehen müssen. Wird im Steuergerät 8 ein atypisches Verhalten erkannt, kann auf ein von der Felge abgelöstes Modul 6 geschlossen werden, und das Steuergerät 8 gibt eine Warnung aus. Dabei kann das Modul 6 vom Steuergerät gezielt angetriggert werden, um die Beschleunigungssignale zu senden. Statt dessen können die Signale auch regelmäßig gesendet und vom Steuergerät 8 analysiert werden.

Des weiteren kann ein von der Felge gelöstes Modul 6 dadurch erkannt werden, dass das Modul 6 eigenständig die Beschleunigungssignale zu den bei korrekter Lage des Moduls 6 in Radial-, Tangential- und Lateralrichtung des Rades weisenden Achsen des Moduls 6 in ihrer Korrelation der einzelnen Komponeten zueinander bewertet. Wird dabei ein von normalen charakteristischen Korrelationen abweichendes, atypisches Verhalten erkannt, kann auf ein loses Modul 6 geschlossen werden, und das Modul 6 sendet eigenständig entsprechende Signale an das Steuergerät 8 aus, welches dann eine Warnung an den Fahrer ausgeben kann.

Ein loses Modul 6 kann auch erkannt werden, wenn die an das Steuergerät 8 übertragenen Beschleunigungssignale zu den Radial-, Tangential- und Lateralrichtungen aller Module 6 am Fahrzeug zumindest nahezu zeitgleich übertragen und ausgewertet und gegeneinander verglichen werden. Ein loses Modul 6 wird dabei ein von den übrigen Modulen 6 deutlich abweichendes Signalbild zeigen und kann somit erkannt werden. Dabei sollten alle Module 6 innerhalb eines kurzen Zeitfensters angetriggert werden, um von allen Modulen 6 das Beschleunigungs-Signalkollektiv bei demselben Fahrzustand zu erhalten.

Schließlich kann ein loses Modul 6 erkannt werden, indem die an das Steuergerät übertragenen Temperaturwerte aller Module 6 am Fahrzeug im Steuergerät 8 ausgewertet und gegeneinander verglichen werden. Ein loses Modul 6 wird dabei von den übrigen Modulen 6 deutlich abweichende Temperatursignale abgeben und kann somit erkannt werden.

## Patentansprüche

1. Verfahren zur Radüberwachung mit einem telemetrischen Reifendruck-Kontrollsystem für die Reifendrücke an Rädern (1,2) eines Fahrzeuges, mit jeweils einen Druckmeßsensor aufweisenden radseitigen Modulen (6) und einem damit - insbesondere drahtlos - zur Auswertung der Sensorsignale kommunizierenden Steuergerät (8), wobei
- ein Warnsignal erzeugt wird, wenn ein Druckschwellwert für den Reifendruck unterschritten wird und/oder ein Druckverlust einen Verlustschwellwert betragsmäßig überschreitet,
**dadurch gekennzeichnet,**
- **daß** die radseitigen Module (6) eine Sensorik für einen sich bei Entfernung des jeweiligen Moduls aus seiner radseitigen Sollposition ändernden Parameter aufweisen und
mittels dieses Parameters die Ablösung eines Moduls (6) aus seiner radseitigen Sollposition erkannt wird und
- von dem Steuergerät (8) bei einer erkannten Ablösung des Moduls (6) ein Warnsignal ausgegeben wird, welches anzeigt, dass sich das Modul (6) nicht mehr in seiner radseitigen Sollposition befindet.

2. Verfahren zur Radüberwachung nach Anspruch 1,
**dadurch gekennzeichnet,**
**daß** die bei Normalbetrieb nur in größeren zeitlichen Abständen mit dem Steuergerät (8) kommunizierenden Module (6) eine interne Auswertung der Sensorsignale aufweisen und bei Erkennung einer gefährlichen Situation sofort in Kommunikation mit dem Steuergerät treten.

3. Verfahren zur Radüberwachung nach einem der Ansprüche 1 oder 2,
**dadurch gekennzeichnet,**
**daß** das Steuergerät (8) von einer Sensorik Informationen über Fahrzustandsparameter erhält und daraus von den Modulen (6) zu erwartende Beschleunigungssignale, die bei korrekter radfester Lage der Module deren Beschleunigungen in Radial-, Lateral- und/oder Tangentialrichtung des Rades wiedergeben, ermittelt sowie mit den tatsächlich von den Modulen (6) abgegebenen Signalen vergleicht, wobei bei einen Toleranzbereich überschreitender Abweichung ein Warnsignal erzeugt wird.

4. Verfahren zur Radüberwachung nach einem der Ansprüche 1 bis 3,
**dadurch gekennzeichnet,**
**daß** das Steuergerät (8) von den Modulen (6) gesendete Beschleunigungssignale, die bei korrekter radfester Lage der Module deren Beschleunigungen in Radial-, Lateral- und/oder Tangentialrichtung des Rades wiedergeben, auf charakteristische Korrelationen zwischen den Beschleunigungskomponenten überprüft und bei einen Toleranzbereich überschreitender Abweichung ein Warnsignal erzeugt.

5. Verfahren zur Radüberwachung nach einem der Ansprüche 1 bis 4,
**dadurch gekennzeichnet,**
**daß** jedes Modul (6) von seiner Sensorik gelieferte Beschleunigungssignale, die bei korrekter radfester Lage der Module deren Beschleunigung in Radial-, Lateral- und/oder Tangentialrichtung des Rades wiedergeben, auf charakteristische Korrelationen zwischen den Beschleunigungskomponenten überprüft und bei einen Toleranzbereich überschreitender Abweichung, vorzugsweise sofort, ein entsprechendes Signal an das Steuergerät (8) sendet, welches dann ein Warnsignal erzeugt.

6. Verfahren zur Radüberwachung nach einem der Ansprüche 1 bis 5,
**dadurch gekennzeichnet,**
**daß** das Steuergerät (8) zumindest nahezu gleichzeitig von allen Modulen (6) Beschleunigungssignale, die bei korrekter radfester Lage der Module deren Beschleunigung in Radial-, Lateral- und/oder Tangentialrichtung des Rades wiedergeben, abruft bzw. erhält und ein Warnsignal erzeugt, wenn eines der Module von den Signalen der anderen Module übermäßig abweichende Signale sendet.

7. Verfahren zur Radüberwachung nach einem der Ansprüche 1 bis 6,
**dadurch gekennzeichnet,**
**daß** die Module (6) Temperatursensoren aufweisen und das Steuergerät (8) ein Warnsignal erzeugt, wenn ein Modul eine Temperatur meldet, die von den übrigen gemeldeten Temperaturen übermäßig abweicht.

## Claims

1. A wheel monitoring process using a telemetric tire pressure monitoring system for the tire pressures on wheels (1, 2) of a vehicle having wheel-mounted modules (6) each with a pressure sensor, and a control device (8) which communicates, in particular wirelessly, with said modules (6) for evaluating the sensor signals,
- a warning signal being generated if the tire pressure falls below a threshold value and/or a pressure loss exceeds a threshold value,
**characterised in that**
- the wheel-mounted modules (6) have a sensor system for a parameter which changes when a given module is removed from its wheel-mounted reference position, and the detachment of the module (6) from its wheel-mounted reference position is recognised by means of this parameter and
- the control device (8) emits a warning signal when it recognises that the module (6) has become detached, thereby indicating that the module (6) is no longer located in its wheel-mounted reference position.

2. A wheel monitoring process in accordance with claim 1,
**characterised in that**
the modules (6) which only communicate with the control device (8) at distant time intervals during normal operation have an internal sensor signal evaluation system and enter into communication with the control device immediately a dangerous situation is identified.

3. A wheel monitoring process in accordance with one of claims 1 or 2,
**characterised in that**
the control device (8) receives information on driving condition parameters from a sensor system and from said information determines acceleration signals to be expected by the modules (6) which, when the modules are located in the correct wheel-mounted positions, reproduce their acceleration values radially, laterally and/or tangentially, and compares them to the signals actually emitted by the modules (6), a warning signal being generated in the event of a deviation exceeding a tolerance range.

4. A wheel monitoring process in accordance with one of claims 1 to 3,
**characterised in that**
the control device (8) verifies the acceleration signals sent by the modules (6) which, when the modules are located in the correct wheel-mounted positions, reproduce their acceleration values radially, laterally and/or tangentially for characteristic correlations between the acceleration components, and generates a warning signal in the event of a deviation exceeding a tolerance range.

5. A wheel monitoring process in accordance with one of claims 1 to 4,
**characterised in that**
each module (6) verifies acceleration signals supplied by its sensor system which, when the modules are located in the correct wheel-mounted positions, reproduce their acceleration values radially, laterally and/or tangentially for characteristic correlations between the acceleration components, and in the event of a deviation exceeding a tolerance range sends a corresponding signal to the control device (8) which then generates a warning signal.

6. A wheel monitoring process in accordance with one of claims 1 to 5,
**characterised in that**
the control device (8) requests or receives from all modules (6) at least almost simultaneously acceleration signals which, when the modules are located in the correct wheel-mounted positions, reproduce their acceleration values radially, laterally and/or tangentially, and generates a warning signal if one of the modules sends signals which deviate excessively from the signals sent by the other modules.

7. A wheel monitoring process in accordance with one of claims 1 to 6,
**characterised in that**
the modules (6) have temperature sensors, and the control device (8) generates a warning signal if a module reports a temperature which deviates excessively from the other temperatures reported.

## Revendications

1. Procédé pour la surveillance de roues avec un système de contrôle télémétrique de pression des pneus sur les roues (1, 2) d'un véhicule, avec un module (6) par roue comportant un capteur de mesure de pression, et un appareil de commande (8) communiquant - notamment sans fil - avec les modules pour l'évaluation des signaux de capteurs,
- un signal d'alerte étant généré si la pression de pneu tombe sous une valeur seuil de pression, et/ou si une perte de pression dépasse en quantité une valeur seuil de perte,
**caractérisé**
- **en ce que** chaque module de roue (6) comporte un dispositif à capteur pour un paramètre variant en cas d'éloignement d'un module par rapport à sa position de consigne sur roue, et en ce que le décollement d'un module (6) de sa position de consigne sur roue est détecté au moyen de ce paramètre, et
- **en ce qu'**un signal d'alerte est adressé par l'appareil de commande (8) en cas de décollement détecté du module (6), indiquant que le module (6) ne se trouve plus dans sa position de consigne sur roue.

2. Procédé pour la surveillance de roues selon la revendication 1, **caractérisé en ce qu'**en service normal, les modules (6) communiquant avec l'appareil de commande (8) ne procèdent à une évaluation interne des signaux de capteur qu'à intervalle temporel prolongé, et entrent en communication avec l'appareil de commande dès qu'une situation à risque est détectée.

3. Procédé pour la surveillance de roues selon l'une des revendications 1 ou 2, **caractérisé en ce que** l'appareil de commande (8) reçoit d'un dispositif à capteur des informations sur les paramètres d'état de conduite et détermine à partir de celles-ci les signaux d'accélération à attendre des modules (6), restituant les accélérations des modules en directions radiale, latérale et/ou tangentielle de la roue en cas de position fixe correcte des modules sur roue, et les compare avec les signaux effectivement adressés par les modules (6), un signal d'alerte étant généré en cas d'écart dépassant une marge de tolérance.

4. Procédé pour la surveillance de roues selon l'une des revendications 1 à 3, **caractérisé en ce que** l'appareil de commande (8) contrôle les corrélations caractéristiques entre les composantes d'accélération des signaux d'accélération adressés par les modules (6), restituant les accélérations des modules en directions radiale, latérale et/ou tangentielle de la roue en cas de position fixe correcte des modules sur roue, et génère un signal d'alerte en cas d'écart dépassant une marge de tolérance.

5. Procédé pour la surveillance de roues selon l'une des revendications 1 à 4, **caractérisé en ce que** chaque module (6) contrôle les corrélations caractéristiques entre les composantes d'accélération des signaux d'accélération adressés par son dispositif à capteur, restituant les accélérations des modules en directions radiale, latérale et/ou tangentielle de la roue en cas de position fixe correcte des modules sur roue, et adresse, de préférence immédiatement, un signal correspondant à l'appareil de commande (8) en cas d'écart dépassant une marge de tolérance, l'appareil de commande générant alors un signal d'alerte.

6. Procédé pour la surveillance de roues selon l'une des revendications 1 à 5, **caractérisé en ce que** l'appareil de commande (8) appelle ou reçoit au moins presque simultanément de tous les modules (6) des signaux d'accélération, restituant les accélérations des modules en directions radiale, latérale et/ou tangentielle de la roue en cas de position fixe correcte des modules sur roue, et génère un signal d'alerte si un des modules adresse des signaux s'écartant excessivement des signaux des autres modules.

7. Procédé pour la surveillance de roues selon l'une des revendications 1 à 6, **caractérisé en ce que** les modules (6) comportent des capteurs de température, et **en ce que** l'appareil de commande (8) génère un signal d'alerte si un module annonce une température s'écartant excessivement des autres températures annoncées.
